# EUROPÄISCHE PATENTSCHRIFT

(11) **EP 1 052 802 B1**
(45) Veröffentlichungstag und Bekanntmachung des Hinweises auf die Patenterteilung: **02.02.2005**
(21) Anmeldenummer: 00109882.1
(22) Anmeldetag: 10.05.2000
(51) Int. Cl.: H04L 12/14, H04L 12/66, H04L 29/06, H04L 29/12, H04L 12/26

(54) **Verfahren zur Kopplung von NetBIOS Netzwerken und Rechnern**
Method for the interface between NetBIOS computers and networks
Méthode pour l'interface entre des ordinateurs et réseaux basés sur NetBIOS

(30) Priorität: 11.05.1999 DE 19921831; 17.11.1999 DE 19955132
(43) Veröffentlichungstag der Anmeldung: 15.11.2000
(73) Patentinhaber: LANCOM Systems GmbH, 52146 Würselen (DE)
(72) Erfinder: Ackers, Guido, 52072 Aachen (DE)
(74) Vertreter: Kohlmann, Kai, Dipl.-Ing.

(56) Entgegenhaltungen:
- WO-A-98/26549
- "RFC 1001: Protocol Standard for a NetBios Service On a TCP/IP Transport: Concepts and Methods" RFC 1001, März 1987 (1987-03), XP002212193
- "REDUCTION OF NETBIOS BROADCAST STROMS CAUSED BY GROUP NAME DISOVERY" IBM TECHNICAL DISCLOSURE BULLETIN, IBM CORP. NEW YORK, US, Bd. 38, Nr. 7, 1. Juli 1995 (1995-07-01), Seiten 409-410, XP000521739 ISSN: 0018-8689
- "TRANSMISION CONTROL PROTOCOL/INTERNET PROTOCOL NETWORKING OVER NETBIOS" IBM TECHNICAL DISCLOSURE BULLETIN, IBM CORP. NEW YORK, US, Bd. 36, Nr. 12, 1. Dezember 1993 (1993-12-01), Seiten 619-620, XP000419088 ISSN: 0018-8689

## Beschreibung

Die Erfindung betrifft ein Verfahren zur Kopplung von NetBIOS-Netzwerken und/oder NetBIOS-Stand-alone Rechnern über gebührenpflichtige Wählverbindungen.

Wählverbindungen sind über direkte Kopplung über das Wählleitungsnetz oder aber auch über den nächsten Einwahlknoten in das Internet herstellbar. Die dabei anfallenden Verbindungskosten sollen durch Vermeidung unnötiger Datenübertragungen reduziert werden.

Erläuterung der im Zusammenhang mit der Erfindung verwendeten Begriffe:

| | |
|---|---|
| **NetBIOS** | NetBIOS stellt eine von IBM definierte BIOS-Erweiterung (Basic Input Output System) dar, die dem Anwender in einem lokalen Netzwerk einfache Netzwerkfunktionen zur Verfügung stellt. NetBIOS ist eine Programmierschnittstelle (API, Application Programming Interface). Als Protokoll, mit dem NetBIOS-fähige Rechner kommunizieren hat IBM NetBEUI (s.u.) definiert. Aufgrund der durch NetBEUI bedingten Einschränkungen wird bevorzugt TCP/IP (Transmission Control Protocol / Internet Protocol) für die Kommunikation von NetBIOS-Rechnern verwendet. Die notwendigen Grundlagen hierzu werden in den RFC 1001 und RFC 1002 definiert. In diesem Fall spricht man von Net-BIOS over TCP/IP. Wenn nachfolgend von NetBIOS gesprochen wird, ist stets NetBIOS over TCP/IP gemeint. |
| **NetBEUI** | Abkürzung für **NetB**IOS Extended **U**ser **I**nterface. Ein von IBM definiertes Netzwerkprotokoll, über das NetBIOS-Geräte miteinander kommunizieren können. NetBEUI basiert auf Rundsende-Nachrichten und direkter Hardware-Adressierung und kann daher nur innerhalb einer Broadcast-Domain verwendet werden. Ein Einsatz ist nur in einem lokalen Netzwerk möglich, da aufgrund der Hardware-Adressierung keine Routing-Mechanismen definiert werden können. |
| **RFC** | Abkürzung für Request for Comments. RFCs sind offene Standards und enthalten sämtlich Definitionen der TCP/IP basierten Protokolle, einschließlich des Protokolls für NetBIOS over TCP/IP. RFCs werden durchnumeriert und nach ihrer Veröffentlichung nie mehr geändert. Es gibt höchstens ergänzende oder ablösende RFCs. Alle RFCs sind kostenlos über das Internet verfügbar. |
| **IP-Adresse** | Die IP-Adresse ist eine logische und daher hardwareunabhängige Adresse, über die ein Rechner in einem IP-Netzwerk angesprochen wird. Diese Adresse enthält zudem einen Netzwerkanteil, über die alle Rechner in einem IP-Netzwerk logisch zu einem Netzwerk zusammengefaßt werden. Alle Rechner in einem solchen logischen Netz gehören zu einer Broadcast-Domain. |
| **IP-Netzwerk** | Ein IP-Netzwerk besteht aus mehreren Einzelrechnern, die über TCP/ IP (Internet-Protokoll) direkt miteinander kommunizieren. |
| **Gateway** | Ein Gateway ist ein Gerät in einem IP-Netzwerk, das es erlaubt mehrere IP-Netzwerke miteinander zu koppeln. Eine Beispiel für eine solche Kopplung ist ein LAN (Local Area Network), das über ein Gateway an das Internet (International Network) angeschlossen ist. |
| **Broadcast-Domain** | Rundsende-Adresse, die für alle in einem IP-Netzwerk vorhandenen Rechner gilt. Im Allgemeinen besteht ein solches IP-Netzwerk aus einem physikalischen Netzwerkstrang. Wenn mehrere Netzwerkstränge über Gateways (Router) gekoppelt werden, hat jeder Strang eine eigene Broadcast-Domain. |
| **NetBIOS-Knoten** | Im RFC 1001 werden mehrere NetBIOS-Knotentypen definiert: |
| | |
| | Broadcast-Knoten - Dies sind Rechner, die zur Umsetzung von Rechnernamen auf IP-Adressen (Namenauflösung) (siehe hierzu auch **NBNS**) Rundsende-Nachrichten verwenden Diese Knoten werden als **B-Knoten** bezeichnet |
| | |
| | Point-To-Point-Knoten Dies sind Rechner, die zur Namenauflösung auf einen NBNS-Server benötigen. Sie werden als P-Knoten bezeichnet. |
| | |
| | Mixed-Mode-Knoten Dies sind Rechner, die sowohl als P- als auch als B-Knoten arbeiten. Sie werden als M-Knoten bezeichnet. Ein M-Knoten verwendet für eine Namenauflösung stets beide Verfahren. |
| | |
| | Hybrid-Knoten Dieser Knotentyp wurde von Microsoft eingeführt und stellt eine besondere Form des M-Knoten dar und wird als H-Knoten bezeichnet. Der Unterschied zum M-Knoten liegt darin, daß ein H-Knoten nur dann Broadcasts zur Namenauflösung verwendet, wenn der NBNS-Server die Namenauflösung nicht durchführen kann. |
| **NBNS** | Abkürzung für **N**et**B**IOS-**N**ame-**S**ervice. In NetBIOS-Netzwerken werden alle Rechner nur über ihren Namen adressiert. Da in einem IP-Netz die Adressierung über IP-Adressen erfolgt, ist eine Umsetzung zwischen NetBIOS-Namen und IP-Adressen notwendig. Das geschieht mit Hilfe des NetBIOS-Name-Service. B-Knoten lösen NetBIOS-Namen über Rundsende-Nachrichten auf, P-Knoten durch Anfragen bei einem speziellen NBNS-Server, der die Umsetzung vornimmt. Bei NetBIOS over TCP/IP wird zur Umsetzung der NetBIOS Namen in IP Adressen das Protokoll UDP (Abkürzung für User Datagramm Protocol, RFC 768) verwendet. Unter NetBIOS werden alle Namen in einem ebenen Namensraum aufgelöst, d.h. hierarchische Strukturen, wie bei Internetnamen (host.domain) sind nicht möglich. Dafür bietet der NetBIOS-Namensraum die Möglichkeit, mehrere Rechner zu Gruppen zusammenzufassen, die gleichzeitig über einen gemeinsamen Namen (den Gruppennamen) angesprochen werden. |
| **NBDD** | Abkürzung für NetBIOS-Datagramm-Distribution-Service. Kurze Nachrichten, die an einen NetBIOS-Rechner (NetBIOS-Host) oder mehrere NetBIOS-Rechner (NetBIOS-Gruppe) gerichtet sind, werden gezielt (Host-Nachricht) oder als Rundsende-Nachrichten (Gruppen-Nachricht) verschickt. Diese Nachrichten müssen nicht bestätigt werden und heißen daher Datagramme. Wenn ein Datagramm an eine NetBIOS-Gruppe in einer anderen Broadcast-Domain verschickt werden soll, so dient ein NBDD-Server dazu, die Rundsende-Datagramme in das Zielnetz weiterzuleiten. NetBIOS over TCP/IP verwendet hierzu ebenfalls das Protokoll UDP |
| **NBSS** | Abkürzung für NetBIOS-Session-Service. Größere Datenübertragungen zwischen zwei NetBIOS-Rechnern werden über eine gesicherte Verbindung, in einer sogenannten NetBIOS-Session (Sitzung) übertragen. Bei NetBIOS over TCP/IP wird hierzu das Protokoll TCP (RFC 675) verwendet, das durch spezielle Sicherungsmechanismen (Sequenz- und Bestätigungsnummern, sowie Prüfsummen) Datenverluste bei der Übertragung verhindert |
| **SMB** | Abkürzung für Server Message Blocks. Ein auf Net-BIOS basierendes Protokoll, über das freigegebene Ressourcen eines Rechners wie Laufwerke, Drucker etc. im Netzwerk bekannt gemacht und anderen Rechnern im Netz zur Verfügung gestellt werden. |

### Stand der Technik

Zur Kopplung von NetBIOS-Netzwerken über Wählverbindungen sind aus dem Stand der Technik mehrere Möglichkeiten bekannt:

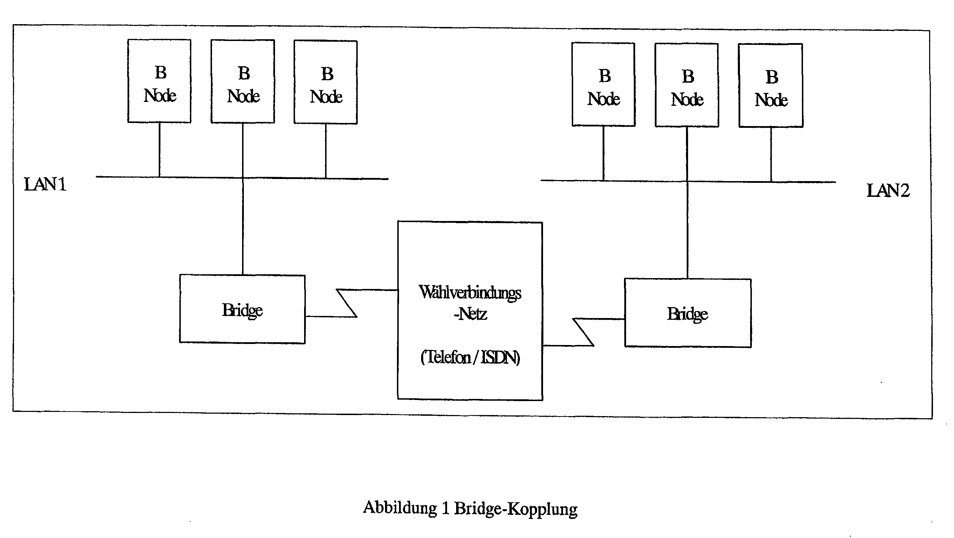

Die erste Methode besteht darin, zwei Netzwerke über eine Bridge (Abbildung 1) zu koppeln. Bei der Bridge-Kopplung werden die Datenpakete aus beiden Netzen unverändert in das jeweils andere Netzwerk übertragen. Da bei der Bridge-Kopplung die Adressierung direkt auf Hardware-Adressebene (Ethernet-Adressen) läuft, kann hierbei sogar das von IBM definierte NetBEUI (NetBIOS Extended User Interface)-Protokoll verwendet werden. Eine Bridge lernt im Laufe der Zeit, welche Hardware-Adresse auf welcher Seite der Bridge zu erreichen ist. Zu diesem Zweck überprüft die Bridge im einfachsten Fall alle Datenpakete aus dem lokalen Netz und trägt die Hardwareadresse des übertragenden Geräts in eine Tabelle ein. Später kann sie anhand der Einträge in der Tabelle entscheiden, ob ein Paket übertragen werden soll oder nicht: Alle Pakete, die an Adressen gerichtet sind, die nicht in der Tabelle stehen, müssen übertragen werden; Pakete, die an Adressen gerichtet sind, die in der Tabelle stehen brauchen nicht übertragen werden. Daher überträgt sie nach der Lernphase nur noch dann Pakete, wenn diese direkt an eine Hardware-Adresse in dem jeweils anderen Netzwerk gerichtet sind. Zusätzlich muß eine Bridge sämtliche Rundsende-Nachrichten übertragen. Dadurch werden die gekoppelten Netzwerke zu einer Broadcast-Domain zusammengefaßt. Dies ist auch der Hauptnachteil der Bridge-Kopplung:
Die unter NetBIOS verwendeten Rechnernamen müssen in eine für das im Netzwerk verwendete Protokoll (z.B. NetBEUI oder TCP/IP) verständliche Adresse umgesetzt werden. Bei Verwendung von NetBEUI ist dies die Hardwareadresse der Netzwerkkarte des Rechners (Ethernet-Adresse) und bei Verwendung von NetBIOS over TCP/IP die IP-Adresse des Rechners. Diese Umsetzung erfolgt bei NetBEUI über eine Rundsende-Nachricht (Broadcast) mit der ein Rechner die Hardware-Adresse eines anderen Rechners erfragt. Der Rechner der den angefragten Namen besitzt antwortet auf diesen Broadcast und teilt dem anfragenden Rechner seine Hardware-Adresse mit. Da sich die gekoppelten Netzwerke in der gleichen Broadcast-Domain befinden, führt nun jede derartige Namenauflösung zu einem Verbindungsaufbau. Hinzu kommt, daß jeder Rechner seinen Namen in regelmäßigen Abständen über Rundsende-Nachrichten im Netz bekannt gibt. In größeren Netzen besteht daher nahezu ständig eine Wählverbindung zwischen den Netzwerken, da regelmäßig Namenauflösungen bzw. Namensbekanntgaben stattfinden. Die Bridge-Kopplung ist daher nur dann sinnvoll einsetzbar, wenn zum einen keine Vermittlungskosten anfallen (Standleitung) und zum anderen ein vom Datenübertragungsvolumen unabhängiger Festpreis für die Verbindung in Rechnung gestellt wird.

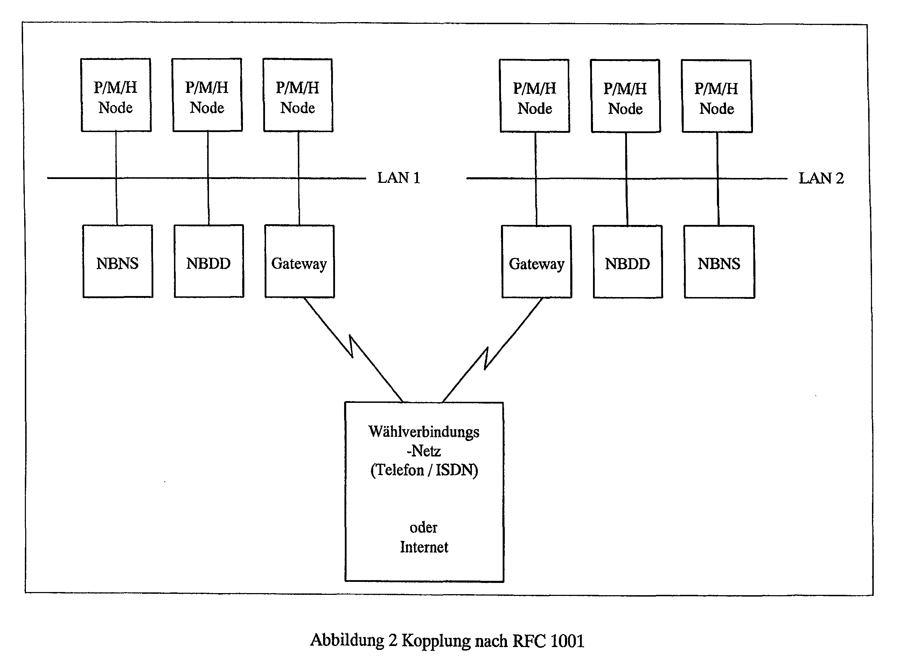

Eine weitere Methode besteht darin, die Netzwerke nach RFC 1001 zu koppeln (Abbildung 2). Als Protokoll wird dazu TCP/IP verwendet, weshalb dies auch als NetBIOS over TCP/IP bezeichnet wird. Die Namensauflösung unter NetBIOS over TCP/IP kann auf zwei Arten erfolgen:
1. Über Rundsende-Nachrichten wie bei NetBEUI, mit dem Unterschied, daß in den Antworten des adressierten Rechners nicht dessen Hardware-Adresse, sondern seine IP-Adresse eingetragen ist. Führt ein Rechner eine Namenauflösung über Rundsende-Nachrichten aus, so bezeichnet man ihn als B-Knoten (Broadcast Knoten)
2. Die zweite Möglichkeit der Namenauflösung erfolgt mit Hilfe eines NetBIOS-Name-Service-Servers (NBNS) auf dem zu jedem Rechner die zu seinem Namen gehörige IP-Adresse gespeichert ist und bei dem jeder Rechner die zu einem gespeicherten Namen gehörende IP-Adresse abfragen kann. Ein Rechner, der einen NBNS benötigt um einen Namen aufzulösen wird als P-Knoten (Point to Point Knoten) bezeichnet.

Zusätzlich zu B- und P-Knoten gibt es noch Mischformen, den M-Knoten (Mixed-Node) und den H-Knoten (Hybrid-Node):

Ein M-Knoten fragt einerseits den NBNS-Server nach dem gesuchten Namen ab, andererseits versucht er gleichzeitig die Namenauflösung über eine Rundsende-Nachricht entsprechend einem B-Knoten durchzuführen.

Ein H-Knoten ist eine von der Firma Microsoft entwickelte Variante eines M-Knotens: Solange der NBNS-Server verfügbar ist verhält sich ein H-Knoten wie ein P-Knoten. Fällt der NBNS-Server aus, oder ist der Name nicht auf dem NBNS-Server gespeichert, so verhält sich ein H-Knoten wie ein B-Knoten.

Bei der Kopplung zweier NetBIOS-Netzwerke nach RFC 1001 muß in jedem Netz ein NetBIOS-Name-Service-Server (NBNS), der die Namenauflösung übernimmt, und ein NetBIOS-Datagram-Distribution-Server (NBDD), der für die Verteilung von Kurzmitteilungen (Datagrammen) verantwortlich ist, installiert werden. Außerdem dürfen die beteiligten NetBIOS-Knoten nicht mehr als B-Knoten konfiguriert sein, damit eine Namenauflösung über den NBNS erfolgen kann. Jeder Rechner in diesem Netz muß daher als P-, M- oder H-Knoten konfiguriert werden. Diese Maßnahmen erlauben nun die Kopplung beider Netze über einen Gateway (Router). Hierdurch reduzieren sich gegenüber der Bridge-Kopplung die Anzahl der Verbindungsaufbauten deutlich, da durch die Router die Broadcast-Domains der beiden gekoppelten Netzwerke getrennt werden. Weiterhin ergeben sich gegenüber der Bridge-Kopplung noch die folgenden Vorteile:
- Durch die Verwendung von TCP/IP muß keine direkte Wählverbindung über das Telefonleitungsnetz mehr zwischen den gekoppelten Netzwerken bestehen. Die Verbindung kann statt dessen auch über das Internet hergestellt werden, d.h. die Wählverbindung besteht in diesem Fall nur noch zum nächsten Internet-Provider des jeweiligen Netzwerkes. Für diese Art der Kopplung müssen Internet-Adressen registriert werden.
- Bei Konfiguration aller Hosts als reine P-Knoten sinkt die Belastung des jeweiligen lokalen Netzwerks durch Rundsende-Nachrichten, wodurch eine höhere Datenübertragungsrate im Netz möglich wird

Trotz dieser Vorteile haften der Kopplung von NetBIOS-Netzwerken über RFC 1001 noch einige Nachteile an:
- Zuerst müssen alle Rechner in den zu koppelnden Netzwerken als P- M- oder H-Knoten konfiguriert werden, was recht kompliziert und insbesondere bei großen Netzen aufwendig und daher für viele Anwender nicht akzeptabel ist.
- Auf allen Rechnern muß die Adresse des NBNS- und des NBDD-Servers manuell konfiguriert werden. Auf einem WINDOWS-Rechner geschieht dies durch die Angabe des WINS-Servers (Abkürzung für Windows Internet Name Service), der beide Aufgaben übernimmt.
- In einem NetBIOS-Netzwerk werden alle Rechner über ihren Namen angesprochen. Dieser wird vom NBNS-Server auf die IP-Adresse des zugehörigen Rechners aufgelöst. Die IP-Adresse kann der Rechner jedoch dynamisch von einem DHCP-Server beziehen. Sie kann sich daher jederzeit ändern, während der Name des Rechners immer gleich bleibt. Die Änderung seiner IP-Adresse teilt der Rechner dem NBNS-Server mit und dieser muß diese Änderung allen auf ihm gespeicherten NBNS-Servern mitteilen. Außerdem muß die Datenbank des NBNS-Servers die Informationen darüber erhalten, ob ein Rechner gestartet ist, um auf eine Anfrage zur Umsetzung eines Rechnernamens entweder die IP-Adresse oder eine Fehlermeldung ausgeben zu können. Da ein NetBIOS-Netzwerk dadurch eine sehr dynamische Struktur aufweist müssen alle beteiligten NBNS-Server regelmäßig ihre internen Datenbanken abgleichen. Hierdurch werden zusätzliche Verbindungen zwischen den gekoppelten Netzwerken aufgebaut
- Der NBDD muß für jedes Datagramm, daß er weiterleiten soll, zunächst beim NBNS die zugehörigen Zieladressen (bei Gruppen-Nachrichten sind es mehr als eine) abfragen und an jeden Rechner einzeln dieses Datagramm übertragen. Hierdurch erhöht sich zum einen die lokale Netzlast, zum anderen wird in jedem Fall eine Verbindung aufgebaut, wenn ein Empfänger eines solchen Datagramms sich in einem entfernten Netzwerk befindet.
- Sobald sich ein Anwender über das Netzwerk auf einem NetBIOS-Rechner anmeldet, um auf freigegebene Ressourcen dieses Rechners zugreifen zu können, wird eine NetBIOS-Sitzung eröffnet. Diese Sitzung wird erst mit dem Abmelden des Anwenders wieder geschlossen. Während einer solchen Sitzung tauschen die beteiligten Rechner auch Daten untereinander aus, die sich dem Anwender nicht als Nutzdaten darstellen. Diese Daten sind z.B. Watchdog-Pakete, mit denen die an der Sitzung beteiligten Rechner regelmäßig überprüfen, ob ihr Kommunikationspartner noch aktiv ist. Befinden sich die beteiligten Rechner in gekoppelten Netzwerken, so führt dieser Datenaustausch zu zusätzlichen Verbindungsaufbauten.

### Problem

Der Erfindung liegt daher die Aufgabe zugrunde ein Verfahren zur Kopplung von NetBIOS- Netzwerken und/oder NetBIOS-Stand-alone Rechner über Wählverbindungsnetze zu schaffen, bei dem die Anzahl der Verbindungsaufbauten reduziert ist und das keine Änderungen der Konfiguration der Rechner erfordert.

### Problemlösung

Die Lösung dieser Aufgabe macht sich die Tatsache zu Nutze, daß die zur Vermeidung unnötiger Verbindungsaufbauten notwendige Information, nämlich ob eine kostenpflichtige Verbindung besteht oder nicht, im Gateway jedes NetBIOS-Netzwerkes bzw. in jedem mit einem Stand-alone Rechner verbundenen Gateway zur Verfügung steht. Weiterhin beruht die Erfindung darauf, daß alle Daten, die an einen Rechner in einem entfernten NetBIOS-Netzwerk übertragen werden sollen, in jedem Fall das Gateway passieren müssen.

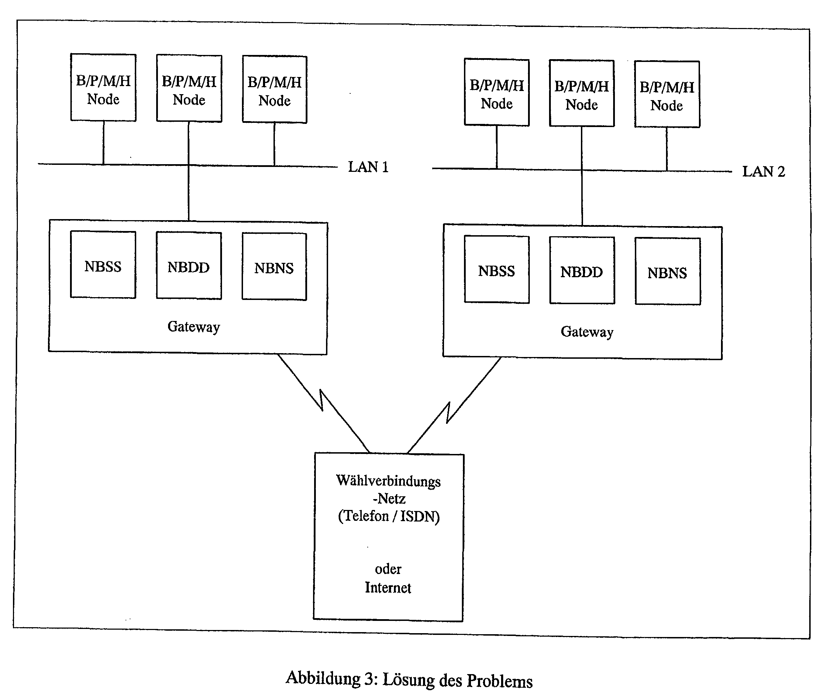

Im Einzelnen wird die Aufgabe durch die Merkmale des Anspruchs 1 gelöst. Wie in Abbildung 3 dargestellt, ist der NBNS-Server, der NBDD-Server sowie eine NBSS-Überwachung auf dem Gateway installiert. Wenn ein Anwender freigegebene Ressourcen eines Rechners über das Netzwerk nutzen will, dann ist hierfür eine NetBIOS-Sitzung notwendig. Um während dieser Sitzung die Verbindungsaufbauten und damit auch -Kosten zu minimieren ist die NBSS-Überwachung notwendig. Da die NBSS-Überwachungen direkt auf dem jeweiligen Gateway installiert sind, können sie jeder Zeit sämtliche Informationen über den Zustand des Gateways, beispielsweise ob eine Verbindung zum Zielnetz besteht, abfragen.

Da auch der NBNS-Server direkt auf dem Gateway installiert ist und somit Zugriff auf die Informationen über den Zustand des Gateways hat, kann er zu einem bestimmten Zeitpunkt, z.B. bei einer Übertragung von Nutzdaten, seine Datenbank mit den anderen NBNS abgleichen, ohne daß dafür ein gesonderter Verbindungsaufbau notwendig ist. Genauso kann der NBDD feststellen, ob das Senden eines Datagramms in ein entferntes NetBIOS-Netzwerk zu einem Verbindungsaufbau führen würde und ggf. das Datagramm verwerfen.

### Abgleich der NBNS-Datenbanken

Nach dem Starten des Gateways durchsucht der auf ihm installierte NBNS das lokale NetBIOS-Netzwerk nach vorhandenen Arbeitsgruppen, Rechnern und -Servern. Das Suchverfahren, nachfolgend als Netzwerkscan bezeichnet, basiert auf der Annahme, daß in einem NetBIOS-Netzwerk normalerweise jeder Rechner freigegebene Ressourcen von mehr als einem anderen Rechner verwendet. Diese Annahme ist für das Funktionieren des Suchverfahrens wichtig. Wenn kein Rechner freigegebene Ressourcen anderer Rechner verwendet, muß der NBNS warten, bis sich alle Rechner selbst bei ihm melden um ein vollständiges Bild des Netzwerks in seiner Datenbank ablegen zu können. Es kann unter Umständen bis zu 60 Minuten dauern (wie man es z.B. in der Netzwerkumgebung" von Windows-Rechnern beobachten kann) bis jeder Rechner in einem NetBIOS-Netzwerk seine freigegebenen Ressourcen bekannt gegeben hat.

Grundlage des Netzwerkscans ist, daß an jedem Rechner abgefragt werden kann, welche weiteren Rechner, Arbeitsgruppen und Server er kennt, d.h. von welchen Rechnern er freigegebene Ressourcen verwendet und in welchen Gruppen sich diese Rechner befinden. Über eine Gruppenanfrage (Adreßauflösung für einen Gruppennamen) für alle in der Antwort darauf von dem Rechner mitgeteilten Gruppen erhält der NBNS die Adressen aller in der jeweiligen Gruppe angemeldeten Rechner. Diese Gruppenanfrage wird als Rundsende-Nachricht (Broadcast) abgesetzt. Jeder Rechner, der Mitglied der angefragten Gruppe ist, überträgt darauf hin seine IP-Adresse zum NBNS. Nun kann der NBNS auf jedem einzelnen dieser Rechner nach weiteren auf ihm gespeicherten Gruppen suchen. Für jede neue Gruppe setzt der NBNS nun wieder eine Gruppenanfrage ab. Dies geschieht so lange, bis keine weiteren Rechner oder Gruppen mehr gefunden werden. Auf diese Weise selbst große Netze innerhalb weniger Sekunden vollständig durchsucht werden. Je größer das Netz ist, um so vollständiger ist das Netzabbild in der Datenbank am Ende der Suche, da die Wahrscheinlichkeit, daß die notwendige Annahme für das Funktionieren des Suchverfahrens erfüllt ist, mit der Netzgröße steigt.

Nach dem Suchvorgang gleicht der NBNS seine Datenbank mit allen ihm bekannten NBNS ab. Hierzu wird einmalig eine Verbindung zu allen über Wählverbindungen angeschlossenen entfernten NetBIOS-Netzwerken aufgebaut, über die ein solcher NBNS erreicht werden kann. Dieser Erstabgleich wird vom NBNS-Server überwacht. Gelingt es nicht die Datenbanken abzugleichen, weil z.B. der NBNS im entfernten NetBIOS-Netzwerk nicht aktiv oder der Einwahlpunkt in das ferne NetBIOS-Netzwerk besetzt ist, so wird der Erstabgleich zu einem späteren Zeitpunkt erneut versucht. In vorteilhafter Ausgestaltung der Erfindung gibt der NBNS nach einer Höchstzahl von Versuchen zum Erstabgleich auf und markiert das entfernt liegende NetBIOS-Netzwerk als nicht erreichbar. Dies verhindert auch ständige Abgleichversuche, wenn der NBNS oder das Gateway falsch konfiguriert sind.

Um Verbindungskosten zu sparen, aber dennoch der Dynamik eines NetBIOS-Netzes, die durch ständiges Ein- und Ausschalten von Rechnern gekennzeichnet ist, Rechnung zu tragen, gleicht der NBNS nach dem Erstabgleich seine Datenbank nur noch dann ab, wenn das Gateway eine Verbindung zu dem fernen Netz aufgebaut hat, in dem sich der andere NBNS befindet, um beispielsweise Nutzdaten zu übertragen. Zudem wird das Gateway so konfiguriert, daß es den NBNS-Server immer dann benachrichtigt, wenn es eine Wählverbindung aufgebaut hat. Daraufhin prüft der NBNS-Server zunächst, ob er das gerade angewählte entfernte NetBIOS-Netzwerk kennt und gleicht ggf. sofort seine Datenbank mit dem dort befindlichen NBNS-Server ab. Änderungen in der Datenbank, die sich während einer bestehenden Verbindung ergeben werden dem fernen NBNS-Server sofort mitgeteilt.

Um die Datenbank und das damit verbundene zum Abgleich notwendige Datenaufkommen so klein wie möglich zu halten, prüft der NBNS-Server jedes Gateways beim Abgleich seiner internen Datenbank mit jeder internen Datenbank der NBNS-Server in entfernten Gateways an Hand der Routing-Tabelle seines Gateways, ob der Rechner aus einem entfernten NetBIOS-Netzwerk oder der entfernte Stand-alone Rechner, dessen Name an den NBNS-Server übertragen wird, überhaupt erreichbar ist.

Hierzu wertet jeder NBNS-Server, an den ein Name aus einem entfernten NetBIOS-Netzwerk oder von einem Stand-alone Rechner übertragen wird, die Routing-Tabelle des zugehörigen Gateways aus, indem der übertragene Name nur dann in die Datenbank des NBNS-Server aufgenommen wird, wenn zum einen ein Routeneintrag zu dem Rechner, dessen Namen übertragen wird, vorhanden ist, und zum anderen der Rechner und der den Namen übertragende NBNS-Server über die selbe Route erreichbar sind.

Zur weiteren Reduzierung der Datenbankgröße kann der NBNS-Server seine Datenbank selektiv abgleichen. Es werden lediglich die Datenbankeinträge übermittelt, die der NBNS-Server von anderen NBNS-Servern als dem, mit dem gerade abgeglichen wird, gelernt wurden. Diese Methode eine Datenbank abzugleichen wird in der Netzwerktechnik allgemein als Split-Horizon-Algorithmus bezeichnet.

### Mischbetrieb verschiedener NetBIOS-Knotentypen

Bei den verschiedenen Knotentypen (B/P/M/H) muß nach dem Verhalten des Knotens unterschieden werden. Es gibt B- und P-Knoten-Verhalten. Die beiden anderen Typen (M- und H-) stellen Mischformen von B- und P-Knoten dar und können sich daher wie ein B- oder ein P-Knoten verhalten oder auch beide Verhaltensweisen gleichzeitig zeigen.

Der RFC 1001 verbietet eigentlich den Mischbetrieb von P- und B- Knoten. Diese Beschränkung liegt darin begründet, daß ein B- Knoten keine Namensinformationen von P- Knoten erhalten kann und umgekehrt, weil B-Knoten die Namenauflösung über Broadcasts durchführen, während P-Knoten dafür den NBNS verwenden.

Um den Mischbetrieb zu ermöglichen, registriert der hier verwendete NBNS sowohl die Namen der P- als auch die der B-Knoten in seiner Datenbank und kann so auch Anfragen eines P-Knoten für einen Namen eines B-Knoten auflösen. Weiterhin beantwortet der NBNS Anfragen eines B-Knotens für einen P-Knotennamen anstelle des eigentlichen Nameninhabers. Bei M- und H-Knoten richtet der NBNS sein Verhalten je nach Art der Anfrage (B- oder P-Anfrage).

Durch die Möglichkeit des Mischbetriebs muß zum einen kein NetBIOS-Rechner neu konfiguriert werden, um zwei NetBIOS-Netzwerke zu koppeln, und zum anderen werden Verbindungsaufbauten, die sich durch Broadcasts für Namenauflösungen eines B-Knoten ergeben, verhindert, da der NBNS-Server auf dem Gateway diese Anfrage beantwortet. Zusätzlich können auch B-Knoten von einem fernen NetBIOS-Netzwerk aus erreicht werden, da der NBNS die IP-Adresse des B-Knotens beim Abgleich der Datenbank dem NBNS im entfernten Netzwerk mitteilt, wodurch der B-Knoten dort bekannt ist und seine Adresse abgefragt werden kann.

### Einwahl in ein NetBIOS-Netzwerk

Durch die Integration des NBNS in das Gateway und die ausschließliche Verwendung von in den RFC1001 und 1002 definierten Protokollen kann dieses Verfahren auch direkt für die Einwahl einzelner Rechner (Einwahl eines nicht in ein LAN eingebundenen Rechners, Dial-In-Knoten) in ein NetBIOS-Netzwerk dienen (RAS-Server, kurz für Remote Access Service).

Da dieser einzelne Rechner normalerweise als B-Knoten konfiguriert ist, könnte er bei einer normalen Installation nach RFC 1001 zwar auf die im LAN freigegebenen Ressourcen zugreifen, er selber könnte jedoch keine Ressourcen im Netzwerk freigeben, da sein Name im LAN nicht aufgelöst werden kann. Der NBNS-Server in dem erfindungsgemäßen Verfahren hingegen erlaubt den Mischbetrieb aller NetBIOS-Knoten. Daher ist auch der Name des eingewählten Stand-alone Rechners im LAN sichtbar und es kann auf freigegebene Ressourcen dieses Rechners zugegriffen werden.

### Gruppennachrichten und der NBDD-Server

Der NBDD-Server dient zur Weiterleitung von Gruppennachrichten in entfernte NetBIOS-Netzwerke. Dazu löst er mit Hilfe des NBNS-Server den Gruppennamen in die zugehörigen IP-Adressen auf und überträgt nach dem bisherigen Stand der Technik das jeweilige Datagramm an jeden Rechner, der Mitglied in der adressierten Gruppe ist. Datagramme sind aber so definiert, daß sie ungesichert übertragen werden. Das bedeutet, daß sie auch verloren gehen dürfen. Der erfindungsgemäß auf dem Gateway installierte NBDD-Server erfragt daher zunächst beim Gateway, ob eine Verbindung zum jeweiligen Ziel besteht. Das Datagramm wird nur dann übertragen, wenn ohnehin eine Verbindung besteht, ansonsten wird es verworfen. Im Gegensatz zum herkömmlichen NBDD-Server kann der auf dem Gateway installierte NBDD-Server auch Datagramme verwerfen, die an einzelne Rechner (Hosts) im entfernten NetBIOS-Netzwerk gerichtet sind, wenn das Gateway keine Verbindung zum jeweiligen entfernten NetBIOS-Netzwerk aufgebaut hat.

### NBSS-Überwachung und Paketfilterung

Ein weiterer Punkt der Verbindungskosten verursacht, sind unerwünschte Datenpakete, die während einer NetBIOS-Session zwischen gekoppelten Net-BIOS-Netzwerken übertragen werden. Zu diesen Paketen zählen alle Pakete, die für den Anwender keine Nutzdaten enthalten. Beispielsweise prüfen NetBIOS-Rechner, wenn über eine längere Zeit keine Daten übertragen wurden, ob ihr Kommunikationspartner noch aktiv ist, was zu einem unerwünschten Verbindungsaufbau führt. Da alle Daten, die an ein entferntes Netz übertragen werden sollen, durch das Gateway laufen müssen, kann dort auch direkt in den Datenstrom eingegriffen werden und alle unerwünschten Pakete gefiltert werden. Hierzu wird auf dem Gateway eine NBSS-Überwachung installiert, die alle NetBIOS-Session-Pakete auf unerwünschte Datenpakete, also solche, die beispielsweise lediglich überprüfen, ob der Kommunikationspartner noch aktiv ist, hin untersucht und diese gegebenenfalls filtert.

Unerwünschte Datenpakete, die bei der Kopplung von NetBIOS-Netzwerken zum Aufbau einer Wählverbindung führen, sind:
- NetBIOS-Watchdogs - hiermit prüft ein Server in regelmäßigen Abständen ob die bei ihm angemeldeten Clients noch aktiv sind.
- SMB-Echo-Requests - Hiermit prüft ein Client in regelmäßigen Abständen ob die Server, bei denen er angemeldet ist, noch aktiv sind.
- Reauthentifizierungspakete - Mit diesen prüfen Server und Clients in unregelmäßigen Abständen die Authentizität ihrer Kommunikationspartner (=> verschlüsselte Paßwortabfrage)

Für die Definition von Client und Server gilt:
- Server ist der Rechner, der freigegeben Ressourcen im Netzwerk zur Verfügung stellt
- Client ist der Rechner, der freigegebene Ressourcen eines Servers nutzt

In einem NetBIOS-Netzwerk kann jeder Rechner gleichzeitig sowohl Server als auch Client sein.

Die auf jedem Gateway installierte NBSS-Überwachung filtert unerwünschte, keine Nutzdaten enthaltende Datenpakete im Datenstrom und gibt an den Rechner im lokalen NetBIOS-Netzwerk des Gateways, der ein solches Paket überträgt eine Rückmeldung aus, die dieser für die Rückmeldung aus dem entfernten NetBIOS-Netzwerk und/oder die Rückmeldung des Stand-alone Rechners hält, damit der Rechner im lokalen NetBIOS-Netzwerk trotz abgebauter Wählverbindung die Sitzung nicht abbricht.

Die NBSS-Überwachung ändert die Sequenz- und Bestätigungsnummern des Sicherungsprotokolls TCP bei jedem unerwünschten Datenpaket derart ab, daß der Rechner im entfernten NetBIOS-Netzwerk und/oder der entfernte Stand-Alone-Rechner die fehlenden unerwünschten Datenpakete nicht bemerkt. Wird ein weiteres unerwünschtes Paket gefiltert, so vergrößert sich die notwendige Änderung der Sequenz- und Bestätigungsnummern entsprechend. Die Sitzungsüberwachung muß für jede NetBIOS-Sitzung zwischen zwei Rechnern in gekoppelten NetBIOS-Netzwerken die notwendigen Änderungen der Sequenz- und Bestätigungsnummern und zusätzlich die IP-Adressen und Ports der an der Sitzung beteiligten Rechner sowie weitere interne Parameter über den Zustand der Verbindung, die zur Verwaltung der Sitzungen in der Datenbank der NBSS-Überwachung nötig sind, speichern. Daher ist die Anzahl der möglichen (gleichzeitigen) Sitzungen durch den auf dem Gateway verfügbaren Speicher beschränkt.

Da Reauthentifizierungspakete verschlüsselt sind (s.o.), können sie von der NBSS-Überwachung nicht korrekt beantwortet und daher auch nicht gefiltert werden. Aus diesem Grund werden nur NetBIOS-Watchdogs und die SMB-Echo-Requests gefiltert.

## Patentansprüche

1. Verfahren zur Kopplung von NetBIOS-Netzwerken und/oder NetBIOS-Stand-alone Rechnern über gebührenpflichtige Wählverbindungen, **dadurch gekennzeichnet, daß**
- jedes NetBIOS-Netzwerk und/oder jeder NetBIOS-Stand-alone Rechner mit mindestens einem Gateway verbunden ist
- jeder Rechner eines NetBIOS-Netzwerk und jeder NetBIOS-Stand-alone Rechner zur Namensauflösung als B-Knoten, P-Knoten, M-Knoten oder H-Knoten konfiguriert ist und auf jedem Gateway ein NBNS-Server installiert ist, der nach seinem Start das mit ihm verbundene NetBIOS-Netzwerk nach vorhandenen NetBIOS-Arbeitsgruppen, -Rechnern und -Servern durchsucht oder den mit ihm verbundenen NetBIOS-Stand-alone Rechner erkennt und dabei zumindest die Namen der NetBIOS-Arbeitsgruppen, -Rechner und/oder -Server, die zu den Namen gehörigen IP-Adressen sowie die Konfiguration der Rechner als B-, P-, M- oder H-Knoten in eine interne Datenbank einträgt,
- der NBNS-Server jedes Gateways nach dieser Durchsuchung eine Wählverbindung zu allen mit ihm gekoppelten NetBIOS-Netzwerken und/oder NetBIOS-Stand-alone Rechnern aufbaut, um seine interne Datenbank mit jeder internen Datenbank der NBNS-Server der Gateways in entfernten NetBIOS-Netzwerken und/oder von entfernten Stand-Alone-Rechnern erstmals über eine Wählverbindung abzugleichen,
- jeder NBNS-Server seine interne Datenbank danach nur noch dann mit NBNS-Servern der Gateways in entfernten NetBIOS-Netzwerken und/oder von entfernten Stand-Alone-Rechnern abgleicht, wenn eine Wählverbindung zum Austausch von Nutzdaten besteht
- auf jedem Gateway ein NBDD-Server installiert ist, der NetBIOS-Datagramme nur dann in entfernte NetBIOS-Netzwerke und/oder an entfernte Stand-Alone-Rechner überträgt, wenn eine Wählverbindung zum Austausch von Nutzdaten besteht,
- auf jedem Gateway eine NBSS-Überwachung installiert ist, die keine Nutzdaten enthaltende Datenpakete im Datenstrom erkennt und an den Rechner im lokalen NetBIOS-Netzwerk des Gateways, der ein solches Paket überträgt eine Rückmeldung ausgibt, die dieser für die Rückmeldung aus dem entfernten NetBIOS-Netzwerk und/oder die Rückmeldung des Stand-alone Rechners hält, damit der Rechner im lokalen NetBIOS-Netzwerk trotz abgebauter Wählverbindung die Sitzung nicht abbricht, wobei die NBSS-Überwachung die Sequenz- und Bestätigungsnummern des Sicherungsprotokolls TCP bei jedem keine Nutzdaten enthaltenden Datenpaket derart abändert, daß der Rechner im entfernten NetBIOS-Netzwerk und/oder der entfernte Stand-Alone-Rechner die fehlenden, keine Nutzdaten enthaltenden Datenpakete nicht bemerkt.

2. Verfahren nach Anspruch 1, **dadurch gekennzeichnet, daß** der NBNS-Server jedes Gateways beim Abgleich seiner internen Datenbank mit jeder internen Datenbank der NBNS-Server in entfernten Gateways an Hand der Routing-Tabelle seines Gateways prüft, ob der Rechner aus einem entfernten NetBIOS-Netzwerk oder der entfernte Stand-alone Rechner, dessen Name und IP-Adresse an den NBNS-Server übertragen wird, überhaupt erreichbar ist.

3. Verfahren nach Anspruch 2, **dadurch gekennzeichnet, daß** jeder NBNS-Server, an den ein Name und eine zugehörige IP-Adresse aus einem entfernten NetBIOS-Netzwerk oder von einem Stand-alone Rechner übertragen wird, die Routing-Tabelle des zugehörigen Gateways auswertet, in dem der übertragene Name nur dann in die Datenbank des NBNS-Server aufgenommen wird, wenn zum einen ein Routeneintrag zu dem Rechner, dessen Namen und IP-Adresse übertragen wird, vorhanden ist, und zum anderen der Rechner und der den Namen und IP-Adresse übertragende NBNS-Server über die selbe Route erreichbar sind.

4. Verfahren nach Anspruch 2 oder 3, **dadurch gekennzeichnet, daß** der Datenbankabgleich zwischen den NBNS-Servern nach dem Split-Horizon-Algorithmus erfolgt, so daß Inhalte der internen Datenbanken der NBNS-Server beim Abgleich nur an diejenigen entfernten NBNS-Server übertragen werden, von denen sie nicht zuvor gelernt wurden.

5. Verfahren nach einem der Ansprüche 1 bis 4, **dadurch gekennzeichnet, daß** beim Datenbankabgleich zwischen den NBNS-Servern übertragene Daten zumindest solange gültig bleiben, bis ein erneuter Abgleich erfolgen konnte.

6. Verfahren nach einem der Ansprüche 1 bis 5, **dadurch gekennzeichnet, daß** die Anzahl von jedem NBNS-Server über das Gateway aufgebauten Wählverbindungen zum erstmaligen Datenbankabgleich mit entfernten NBNS-Servern beschränkt ist.

7. Verfahren nach einem der Ansprüche 1 bis 6, **dadurch gekennzeichnet, daß** das Verfahren über die in RFC 1001 und RFC 1002 definierten Protokolle abgewickelt wird.

## Claims

1. A method for connecting NetBIOS networks and/or NetBIOS stand-alone computers via fee-based dialup connections, **characterized in that**
- each NetBIOS network and/or each NetBIOS stand-alone computer is connected to at least one gateway, **in that**
- each computer of a NetBIOS network and each NetBIOS stand-alone computer is configured as a B-node, P-node, M-node or H-node for the name resolution and each gateway contains a NBNS server that scans the NetBIOS network connected to this server for existing NetBIOS workgroups, NetBIOS computers and NetBIOS servers or recognizes the NetBIOS stand-alone computer connected to this server after it is started and enters at least the name of the NetBIOS workgroups, NetBIOS computers and/or NetBIOS servers, the IP-addresses belonging to the names and the configuration of the computers as B-nodes, P-nodes, M-nodes or H-nodes into an internal databank, **in that**
- the NBNS server of each gateway establishes a dialup connection with all NetBIOS networks and/or NetBIOS stand-alone computers connected to this server after this scan in order to initially synchronize its internal databank with each internal databank of the NBNS servers of the gateways in the remote NetBIOS networks and/or of remote stand-alone computers via a dialup connection, **in that**
- each NBNS server then only synchronizes its internal databank with the NBNS servers of the gateways in remote NetBIOS networks and/or of remote stand-alone computers if a dialup connection for exchanging useful data exists, **in that**
- a NBDD server is installed on each gateway which only transmits a NetBIOS datagram to remote NetBIOS networks and/or to remote stand-alone computers if a dialup connection for exchanging useful data exists, and **in that**
- a NBSS monitoring unit is installed on each gateway which recognizes data packets in the data flow that do not contain useful data and transmits an acknowledgement to the computer in the local NetBIOS network of the gateway which transmits such a packet, wherein said computer interprets this acknowledgement as the acknowledgment from the remote NetBIOS network and/or the acknowledgment from the stand-alone computer in order to prevent the computer from interrupting the session in the local NetBIOS network despite the fact that the dialup connection no longer exists, and wherein the NBSS monitoring unit changes the sequence and confirmation numbers of the security protocol TCP each time a data packet without useful data is received, namely in such a way that the computer in the remote NetBIOS network and/or the remote stand-alone computer does not notice that the data packets containing no useful data are missing.

2. The method according to Claim 1,
**characterized in that**
the NBNS server of each gateway checks with the aid of the routing table of its gateway whether or not the computer in a remote NetBIOS network or the remote stand-alone computer, the name and IP-address of which are transmitted to the NBNS server, can even be reached during the synchronization of its internal databank with each internal databank of the NBNS servers in remote gateways.

3. The method according to Claim 2,
**characterized in that**
each NBNS server that receives a name and a corresponding IP-address from a remote NetBIOS network or from a stand-alone computer evaluates the routing table of the corresponding gateway in such a way that the transmitted name is only entered into the databank of the NBNS server if a routing entry exists to the computer, the name and IP-address of which are transmitted, and if the computer and the NBNS server transmitting the name and IP-address can be reached via the same route.

4. The method according to Claim 2 or 3,
**characterized in that**
the databank synchronization between the NBNS servers is carried out in accordance with the Split Horizon Algorithm such that the contents of the internal databanks of the NBNS servers are only transmitted to those remote NBNS servers, from which they were not previously learned.

5. The method according to one of Claims 1-4,
**characterized in that**
data transmitted during the databank synchronization between the NBNS servers remains valid at least until a new synchronization can be carried out.

6. The method according to one of Claims 1-5,
**characterized in that**
the number of dialup connections established by each NBNS server via the gateway is limited to the initial databank synchronization with remote NBNS servers.

7. The method according to one of Claims 1-6,
**characterized in that**
the method is carried out with the protocols defined in RFC 1001 and RFC 1002.

## Revendications

1. Procédé pour le couplage de réseaux NetBIOS et/ou d'ordinateurs individuels NetBIOS par le biais de connexions multiples soumises à des conditions d'accès, **caractérisé en ce que** :
- Chaque réseau NetBIOS et/ou chaque ordinateur individuel NetBIOS est relié à au moins une passerelle,
- Chaque ordinateur d'un réseau NetBIOS et/ou chaque ordinateur individuel NetBIOS est configuré pour l'affectation de noms sous la forme de noeuds B, noeuds P, noeuds M, ou noeuds H et sur chaque passerelle un serveur NBNS est installé, qui après son démarrage réalise l'investigation du réseau NetBIOS qui lui est connecté quant à la présence de groupes de travail, d'ordinateurs et de serveurs NetBIOS ou qui reconnaît les ordinateurs individuels NetBIOS qui lui sont connectés et entre, de ce fait, au moins les noms des groupes de travail, des ordinateurs et/ou des serveurs NetBIOS, qui entrent les adresses IP associées aux noms, ainsi que la configuration des ordinateurs en tant que noeuds B, noeuds P, noeuds M, ou noeuds H dans une banque de données internes,
- serveur NBNS de chaque passerelle établit, après cette investigation, une connexion multiple avec tous les réseaux NetBIOS couplés avec lui et/ou tous les ordinateurs individuels NetBIOS, afin de mettre à jour sa banque de données internes avec chaque banque de données internes du serveur NBNS des passerelles dans les réseaux NetBIOS éloignés et/ou des ordinateurs individuels éloignés, par le biais d'une connexion multiple,
- Chaque serveur NBNS ne met alors à jour sa banque de données internes avec les serveurs NBNS des passerelles dans les réseaux NetBIOS éloignés et/ou des ordinateurs individuels éloignés, que si une connexion multiple pour le remplacement de données d'utilisation existe,
- sur chaque passerelle est installé un serveur NBDD qui ne transfert alors des datagrammes NetBIOS dans des réseaux NetBIOS éloignés et/ou vers des ordinateurs individuels éloignés, que si une connexion multiple pour le remplacement de données d'utilisation existe,
- sur chaque passerelle est installée une unité de supervision NBSS qui reconnaît les paquets de données ne contenant pas de données d'utilisation dans le flux de données et émet une indication en retour vers l'ordinateur dans le réseau NetBIOS local de la passerelle, qui transmet un tel paquet, ladite indication en retour servant d'indication en retour issue du réseau NetBIOS éloigné et/ou de l'ordinateur individuel, afin que l'ordinateur dans le réseau NetBIOS local n'interrompe pas la session en dépit de la coupure de la connexion multiple, en ce sens que l'unité de supervision NBSS modifie les nombres séquentiels et de confirmation du protocole TCP de sécurisation, pour chaque paquet de données ne contenant pas de données d'utilisation, de telle sorte que l'ordinateur dans des réseaux NetBIOS éloignés et/ou vers des ordinateurs individuels éloignés ne remarque pas l'absence de paquets de données ne contenant pas de données d'utilisation.

2. Procédé selon la revendication 1,
**caractérisé en ce que**
le serveur NBNS de chaque passerelle vérifie, lors de la mise à jour de sa banque de données avec chaque banque de données internes des serveurs NBNS dans les passerelles éloignées à l'aide des tableaux de routage de sa passerelle, la possibilité d'atteindre en général l'ordinateur faisant partie d'un réseau NetBIOS éloigné et/ou vers un ordinateur individuel éloigné, dont le nom et l'adresse IP est transmise au serveur NBNS.

3. Procédé selon la revendication 2,
**caractérisé en ce que**
chaque serveur NBNS, auquel un nom et une adresse IP associée au nom sont transmis à partir d'un réseau NetBIOS éloigné ou d'un ordinateur individuel, évalue le tableau de routage de la passerelle associée, dans laquelle le nom transmis n'est alors reçu dans la banque de données du serveur NBNS que si d'une part une entrée d'accès à l'ordinateur, dont le nom et l'adresse IP sont transmises, est présent, et que si d'autre part l'ordinateur et le serveur NBNS transmettant le nom et l'adresse IP par le biais du même chemin d'accès, sont susceptibles d'être atteints.

4. Procédé selon la revendication 2 ou 3,
**caractérisé en ce que**
la mise à jour des banques de données entre les serveurs NBNS selon l'algorithme du type «Split-Horizon" intervient de telle façon que les contenus des banques de données internes des serveurs NBNS ne sont transmis qu'aux serveurs NBNS éloignés considérés, desquels ils n'ont pas eu connaissance avant.

5. Procédé selon l'une des revendications 1 à 4,
**caractérisé en ce que**
lors de la mise à jour des banques de données entre les serveurs NBNS, les données transmises restent au moins valables aussi longtemps qu'une nouvelle mise à jour survient.

6. Procédé selon l'une des revendications 1 à 5,
**caractérisé en ce que**
le nombre de connexions multiples établies par chaque serveur NBNS par le biais de la passerelle, lors de la première mise à jour des banques de données avec des serveurs NBNS éloignés, est limité.

7. Procédé selon l'une des revendications 1 à 6,
**caractérisé en ce que**
le procédé est exécuté selon le déroulement des protocoles définis dans les RFC 1001 RFC 1002.
